(19) Europäisches Patentamt
European Patent Office
Office européen des brevets

(11) **EP 3 387 914 A1**

(12) **EUROPEAN PATENT APPLICATION**

(43) Date of publication:
**17.10.2018 Bulletin 2018/42**

(51) Int Cl.:
*A23L 7/10* (2016.01)  *A23J 3/14* (2006.01)
*A23J 3/22* (2006.01)  *A23J 3/26* (2006.01)
*A23L 7/117* (2016.01)  *A23L 33/185* (2016.01)
*A23L 33/21* (2016.01)

(21) Application number: **17166060.8**

(22) Date of filing: **11.04.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Gold&Green Foods Oy
00100 Helsinki (FI)**

(72) Inventors:
• **ITKONEN, Maija
  00560 Helsinki (FI)**
• **KIVELÄ, Reetta
  00210 Helsinki (FI)**
• **JIANG, Zhong-Qing
  00620 Helsinki (FI)**

(74) Representative: **Berggren Oy, Turku
P.O. Box 99
Tykistökatu 2-4 B
20521 Turku (FI)**

(54) **TEXTURIZED PROTEIN PRODUCT**

(57)  The invention relates to a texturized protein product, which is prepared from legume material comprising legume protein and cereal material comprising bran and cereal protein. The product comprises particles having at least partially fibrous structure, where at least 80 % of fibres have a length in the range 1 - 30 mm and a thickness in the range of 5 - 35 μm. Furthermore, the product comprises at least 70 weight-% of particles having a particle size ≥ 1 cm and less than 20 weight-% of particles having the particle size ≥ 4 cm, whereby 100 weight-% of the particles have the particle size ≤ 7 cm.

EP 3 387 914 A1

**Description**

The present invention relates to a texturized protein product according to the preamble of the enclosed independent claim.

Recently consumers have been showing a growing interest in sustainable and healthy diet. This has led to an increase in plant based products that can be used to replace meat in a daily diet. In order to gain a wider acceptance among mainstream consumers these plant based products, i.e. meat substitutes, should be easy to prepare and provide nutritionally balanced meals. Furthermore, they should provide an appealing and pleasant mouth-feel, even when heated, cooked and/or fried. Generally it is desired that the appearance and the mouth-feel of the plant-based product should provide the consumer a meat-like experience.

A general problem is that the most of the plant-based products are not able to mimic the meaty appearance and mouth-feel in a satisfactory manner. The products can have unpleasant gummy texture, especially when they are heated, and they are not able to provide crispy mouth-feel after frying on a pan. Many of the products, which are provided as meat substitutes, are based on soya, which may induce a beany-taste and rubbery or slimy structure to the product. Some commercially available products are based on mixtures of oat and legumes. These products are more satisfactory in their taste and mouth-feel, but there is a constant need to improve the meat-like appearance and general acceptability of the plant-based products which are intended for use as meat substitutes.

An object of the present invention is to minimise or even eliminate the disadvantages existing in the prior art.

An object of the invention is also to provide a texturized protein product, which provides enhanced mouth-feel and meat-like appearance, even when the product is heated or fried.

Another object of the invention is to provide a texturized protein product, which provides balanced composition, even in view of nutrients and/or micronutrients.

These objects are attained with the invention having the characteristics presented below in the characterising parts of the independent claims.

Typical texturized protein product according to the present invention

- is prepared from legume material comprising legume protein and cereal material comprising bran and cereal protein, and
- comprises particles having at least partially fibrous structure, where at least 80 % of fibres have a length in the range 1 - 30 mm and a thickness in the range of 5 - 35 μm,

wherein the product comprises at least 70 weight-% of particles having a particle size ≥1 cm and less than 20 weight-% of particles having the particle size ≥ 4 cm, whereby 100 weight-% of the particles have the particle sizes ≤ 7 cm.

Now it has been surprisingly found out that a defined particle size distribution has a major impact in and enhances the mouth-feel of the texturized protein product. It has been observed that the particle size distribution has unexpectedly strong impact on the consumer perception and approval of the product. The particle size distribution according to the present invention was found to provide together with the other properties of the product an enhanced feeling of minced or chopped beef or well-prepared chicken. It is assumed, without wishing to be bound by a theory, that the specified particle size distribution somehow corresponds to the human perception of well-prepared meat and improves the mouth-feel of the product.

In the present context "texturized protein product" is understood as solid fibrous product, which is produced from cereal material and legume material by cooking the starting materials in an extruder cooker and extruding them to form a texturized food product. Suitable production processes are disclosed e.g. in patent applications EP 15190251.7 and PCT/EP2016/074556. It has been observed that the processing parameters, e.g. mixing power, can be suitably adjusted for production of texturized protein product according to the present invention. For example, if the processing is too strong, the particle size may become too small.

It has been observed that the amount of particles in different size categories is important for creating the desired mount-feel and the meat-like illusion. According to one preferable embodiment of the invention the texturized protein product comprises

- 5 - 30 weight-%, preferably 8 - 26 weight-%, more preferably 10 - 21 weight-% of the particles having the particle size < 1 cm;
- 60 - 95 weight-%, preferably 66 - 88 weight-%, more preferably 71 - 83 weight-% of the particles having the particle size in the range of 1 - <4 cm;
- 0 - 20 weight-%, preferably 0 - 16 weight-%, more preferably 0 - 7 weight-% of the particles having the particle size in the range of 4 - 7 cm.

The texturized protein product may comprise

- 10 - 45 weight-%, preferably 15 - 40 weight-%, more preferably 20 - 35 weight-% of the particles having the particle size in the range of 1 - <2 cm;
- 20 - 50 weight-%, preferably 25 - 45 weight-%, more preferably 30 - 40 weight-% of the particles having the particle size in the range of 2 - <3 cm;
- 5 - 40 weight-%, preferably 10 - 35 weight-%, more preferably 12 - 24 weight-% of the particles having the particle size in the range of 3 - 4 cm.

The particles of the texturized protein product have often an irregular shape. Particle size, in the present context, refers to the largest dimension of a particle, which is measured by drawing a straight line from an outer edge of the particle through the centre of the particle to the opposite edge of the particle.

In the present context the term "cereal" denotes grains from grasses of family Poaceae, excluding however wheat. These grains comprise endosperm, grain and bran. Examples of cereals are oat, barley, rye, rice and corn. The term "cereal material" encompasses all different kinds of material fractions obtainable by processing, such as separation, isolation and/or milling, of cereals. Cereal material may preferably be whole grain material, which is obtained by milling whole grains of cereal. Alternatively, cereal material may also preferably be cereal protein isolated from the grain, processed or unprocessed bran isolated from the grain or processed or unprocessed endosperm isolated from the grain. Cereal material encompasses also mixtures of said materials, for example, a mixture of whole grain material and isolated cereal protein. It is possible to optimise the nutrient content of the texturized protein product by appropriately selecting and mixing the starting materials.

According to one embodiment of the invention the texturized protein product comprises cereal protein in total amount in the range of 5 - 35 weight-%, preferably 7 - 25 weight-%, more preferably 11 - 17 weight-%, calculated from the total dry mass of the product. The total amount of cereal protein includes both the natural cereal protein present in the cereal material and optional added isolated cereal protein. It has been observed that this amount of cereal protein provides good nutritional composition as well as easy processability during the production.

According to one preferable embodiment the cereal material comprises whole grain cereal material and/or isolated cereal bran material. It is possible to influence the mouth-feel and/or physical properties of the texturized protein product by careful selection of the type and/or amount of the whole grain material and/or bran material used for preparing the product. For example bran, either isolated or included in the whole grain cereal material, improves the texture of the protein product by optimising it chewability. By changing the amount of bran it is possible to influence the firmness and/or mouth-feel of the product. The product may comprise whole grain cereal material and/or cereal bran in amount of 5 - 44 weight-%, preferably 12 - 40 weight-%, more preferably 15 - 26 weight-%, calculated from the total dry mass of the product.

According to one preferable embodiment the cereal is selected from a group consisting of oat, barley, rye, and any mixture of these, preferably oat. By selection of the type of the cereal material or by selection of the cereal and their amounts in a mixture of different cereal materials it is possible to influence the structure and composition of the obtained texturized protein product. According to one preferable embodiment the cereal material comprises oat bran, optionally as a mixture with oat protein. In addition to texture of the product oat bran improves the nutritional composition of the product, e.g. by increasing the amount of beta glucan in the product.

The texturized protein product is preferably free from wheat, wheat protein and gluten.

In addition to cereal material the textured protein product is produced from legume material comprising legume protein. Legume material encompasses both legume material, e.g. legume powder or flour, which contains natural amounts of legume protein, as well as legume material to which has been added isolated legume protein and which contains elevated amounts of legume protein. Suitable legume material is, for example, plants from the family *Fabaceae* (or *Leguminosae*), or the fruit or seed of such a plant. Suitable legume material include alfalfa, clover, different species of peas, different species of beans, different species of vicia fabas, lentils, lupins, mesquite, carob, peanuts and tamarind. Preferably legume material is selected from species of peas and vicia fabas, most preferably from species of vicia faba. The texturized protein product is preferably free from soy, soy protein and soy derived components.

According to one embodiment of the invention the texturized protein product comprises legume protein in total amount in the range of 35 - 60 weight-%, preferably 37 - 55 weight-%, more preferably 41 - 51 weight-%, calculated from the total dry mass of the product. The total amount of legume protein includes both the natural legume protein present in the legume material and optional added isolated legume protein.

The texturized protein product may be prepared from 50 - 70 weight-%, preferably 56 - 66 weight-%, of legume material, and 30 - 50 weight-%, preferably 34 - 44 weight-%, of cereal material, calculated as dry matter. Legume material and cereal material in the product may be carefully selected not only in order to provide optimal structure for the product but also for providing the texturized protein product with optimal amounts of various micronutrients.

According to one preferable embodiment the texturized protein product is completely free from animal-based constituents, such as animal fat, milk and blood. This makes the product suitable for all consumer groups, irrespective for their religious and/or ethical beliefs. This means that there is no need to modify the basic recipe of the product depending on the specific market segment requirements.

Furthermore it has been observed that the particle size distribution is an important parameter for controlling the oil absorption rate of the texturized protein product. This means that it is possible to change the oil absorption rate by modifying the particle size distribution, as the small particles (< 2 g) absorb more oil than large particles (> 10 g). According to one embodiment of the invention the texturized protein product, having a particle size distribution as defined above, may have an oil absorption ratio in the range of 8 - 45 %, preferably 13 - 35 %, more preferably 14 - 30 %. The oil absorption is measured as follows:

(1) weigh a desired amount of product sample, typically ca 250 g, and record the result as the "Original weight";
(2) immerse the sample into edible liquid oil, such as rapeseed oil, in a beaker-like container, at room temperature;
(3) after a defined period of time (minimum 15 min) separate the sample (which now contains absorbed oil) from the rest of the oil by sieving or filtering;
(4) weigh the sample containing absorbed oil and record the result as "Weight after absorbing oil".

The oil absorption ratio can then be calculated by using the equation:

$$absorption\ ratio = \frac{Weight\ after\ absorping\ oil - Original\ weight}{Original\ weight} \times 100\ \%$$

If the oil absorption ratio is too high, an excessive amount of oil is needed during the cooking to obtain an even wetting of the surfaces of the product particles by oil. On the other hand, if the oil absorption is low, the desired cooking effect, e.g. the formation of a crispy surface on the product particles, may not be achieved.

It is also possible to determine the oil absorption ratio for individual particle size categories. According to one embodiment of the invention the particles of the textured protein product having weight < 2 g have an oil absorption ratio in the range of 20 - 45 %, preferably 25 - 40 %; the particles of the texturized protein product having weight 2 - 4 g have an oil absorption ratio in the range of 10 - 30 %, preferably 15 - 25 %; and the particles of the textured protein product having weight > 4 g have an oil absorption ratio in the range of 8 - 28 %, preferably 13 - 23 %.

Texturized protein product comprises particles having at least partially fibrous structure. The individual fibres of the product may have a thickness in the range of 5 - 35 μm. The length of the individual fibres is at least partially dependent on the size of the product particles and may be in the range of 35 - 30 000 μm. The fibres are preferably three-dimensionally entangled, and the fibrous structure preferably comprises voids between the fibres. The three-dimensional entanglement of the fibres means that the texturized protein product preferably comprises fibres of which > 20%, more preferably > 30%, even more preferably > 40 %, are at the angle of 35 - 90°, preferably 40 - 90°, in relation to each other. The fibre direction measurement is done by a taking an arbitrary sample of 10 mm x 10 mm, and then visually assessing the fibre directions. The fibre direction may also be assessed by using an imagining system, such as micro-computed tomography scanner. The three-dimensional entanglement of the fibres provides a product which has uniform cutting shear resistance in every direction, which greatly improves the mouth-feel of the product. According to one embodiment of the invention the difference in cutting shear resistance values in three perpendicular directions is less than 30%, preferably less than 20%, more preferably less than 10%.

According to one embodiment of the invention the texturized protein product comprises vegetable oil, such as rape seed oil, sun flower oil, olive oil or any mixture thereof. Vegetable oil may be added to the texturized protein product in order to improve its fatty acid content.

Furthermore, the texturized protein product has carbohydrates to protein ratio < 1, preferably < 0.5, more preferably < 0.35. This ratio is beneficial when the product is used as a part of diet for weight-control purposes. Carbohydrates to protein ratio of the texturized protein product is also advantageous for maintain and/or increasing muscle mass and for bone health.

According to one embodiment of the invention the texturized protein product may comprise potassium in amount of 400 - 1600 mg, preferably 600 - 1200 mg, more preferably 660 - 1000 mg, and/or magnesium in amount of 80 - 220 mg, preferably 100 - 180 mg, more preferably 140 - 160 mg, given per 100 g of dry product. For example, the magnesium amount in the protein product provides necessary supply of magnesium for persons leading physically active lifestyle.

The texturized protein product may further comprise zinc in amount of 2 - 20 mg, preferably 4 - 14 mg, more preferably 5 - 10 mg; phosphorus in the amount of 600 - 1200 mg, preferably 840 - 1000 mg; and/or iron in the amount of 6 - 20 mg, preferably 8 - 16 mg, given per 100 g dry product. These values provide a balanced composition of necessary nutrients in the protein product.

Preferably the texturized protein product comprises less than 1 μg/g of acrylamide. This means that the texturized protein product also fulfils the requirements of food regulations.

The texturized protein product may further comprise taste enhancers, such as salt and/or spices. The amount of taste enhancers may be less than 15 weight-%, preferably less than 10 weight-%, more preferably less than 8 weight-%, calculated from the total dry mass of the product. It has been observed that addition of suitable taste enhancers may also improve the storage properties of the product and/or improve the frying properties of the product by creating a crispy surface feeling.

The moisture content of the textured protein product may be in the range of 40 - 60 weight-%, preferably 49 - 54 weight-%, more preferably 50 - 52 weight-%.

The texturized protein product may have a water activity $a_w$ in the range 0.920 - 0.980, preferably 0.925 - 0.955. This means that the protein product has a good microbial stability and long shelf life.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

**Claims**

1. Texturized protein product, which

   - is prepared from legume material comprising legume protein and cereal material comprising bran and cereal protein, and
   - comprises particles having at least partially fibrous structure, where at least 80 % of fibres have a length in the range 1 - 30 mm and a thickness in the range of 5 - 35 μm,

   wherein the product comprises at least 70 weight-% of particles having a particle size ≥1 cm and less than 20 weight-% of particles having the particle size ≥ 4 cm, whereby 100 weight-% of the particles have the particle size ≤ 7 cm.

2. Texturized protein product according to claim 1, **characterized in that** the product comprises

   - 5 - 30 weight-%, preferably 8 - 26 weight-%, more preferably 10 - 21 weight-% of the particles having the particle size < 1 cm;
   - 60 - 95 weight-%, preferably 66 - 88 weight-%, more preferably 71 - 83 weight-% of the particles having the particle size in the range of 1 - <4 cm;
   - 0 - 20 weight-%, preferably 0 - 16 weight-%, more preferably 0 - 7 weight-% of the particles having the particle size in the range of 4 - 7 cm.

3. Texturized protein product according to claim 1 or 2, **characterized in that** the product comprises

   - 10 - 45 weight-%, preferably 15 - 40 weight-%, more preferably 20 - 35 weight-% of the particles having the particle size in the range of 1 - <2 cm;
   - 20 - 50 weight-%, preferably 25 - 45 weight-%, more preferably 30 - 40 weight-% of the particles having the particle size in the range of 2 - <3 cm;
   - 5 - 40 weight-%, preferably 10 - 35 weight-%, more preferably 12 - 24 weight-% of the particles having the particle size in the range of 3 - 4 cm.

4. Texturized protein product according to claim 1, 2 or 3, **characterized in that** the fibres are three-dimensionally entangled, and the fibrous structure preferably comprises voids between the fibres.

5. Texturized protein product according to any of preceding claims 1 - 4, **characterized in that** the product has an oil absorption ratio in the range of 8 - 45 %, preferably 13 - 35 %, more preferably 14 - 30 %.

6. Texturized protein product according to any of preceding claims 1 - 5, **characterized in that** the product comprises vegetable oil, such as rape seed oil, sun flower oil, olive oil.

7. Texturized protein product according to any of preceding claims 1 - 6, **characterized in that** the product has carbohydrates to protein ratio < 1, preferably < 0.5, more preferably < 0.35.

8. Texturized protein product according to any of preceding claims 1 - 7, **characterized in that** the product comprises

- potassium in amount of 400 - 1600 mg, preferably 600 - 1200 mg, more preferably 660 - 1000 mg, and/or
- magnesium in amount of 80 - 220 mg, preferably 100 - 180 mg, more preferably 140 - 160 mg,

given per 100 g dry product.

9.  Texturized protein product according to any of preceding claims 1 - 8, **characterized in that** the product comprises

- zinc in amount of 2 - 20 mg, preferably 4 - 14 mg, more preferably 5 - 10 mg, and/or
- phosphorus in amount of 600 - 1200 mg, preferably 840 - 1000 mg, and/or
- iron in amount of 6 - 20 mg, preferably 8 - 16 mg,

given per 100 g dry product.

10. Texturized protein product according to any of preceding claims 1 - 9, **characterized in that** the cereal material is selected from a group consisting of oat, barley, rye and any mixture of these, preferably oat.

11. Texturized protein product according to any of preceding claims 1 - 10, **characterized in that** the cereal material comprises whole grain cereal and/or cereal bran.

12. Texturized protein product according to any of preceding claims 1 - 11, **characterized in that** the product is free from animal-based constituents, wheat, wheat protein, gluten, soy, soy protein and/or soy derived components.

13. Texturized protein product according to any of preceding claims 1 - 12, **characterized in that** the product is prepared from 50 - 70 weight-%, preferably 56 - 66 weight-%, of legume material and 30 - 50 weight-%, preferably 34 - 44 weight-%, of cereal material, calculated as dry matter.

14. Texturized protein product according to any of preceding claims 1 - 13, **characterized in that** it comprises cereal protein in the range of 5 - 35 weight-%, preferably 7 - 25 weight-%, more preferably 11 - 17 weight-%; and/or legume protein in total amount in the range of 35 - 60 weight-%, preferably 37 - 55 weight-%, more preferably 41 - 51 weight-%, calculated from the total dry mass of the product.

15. Texturized protein product according to any of preceding claims 1 - 14, **characterized in that** it comprises less than 1 $\mu$g/g of acrylamide.

Europäisches
Patentamt

European
Patent Office

Office européen
des brevets

# EUROPEAN SEARCH REPORT

Application Number

EP 17 16 6060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/035058 A2 (SYRAL BELGIUM NV [BE]) 10 March 2016 (2016-03-10) <br> * page 3, line 1 - page 4, line 3 * <br> * page 4, lines 19-23 * <br> * page 5, line 29 - page 6, line 4 * <br> * page 7, lines 6-11,31-32 * <br> * page 8, lines 21-31 * <br> * examples 3,4,6 * <br> * page 12, line 27 - page 13, line 7 * | 1-3, 5-12,15 | INV. <br> A23L7/10 <br> A23J3/14 <br> A23J3/22 <br> A23J3/26 <br> A23L7/117 <br> A23L33/185 <br> A23L33/21 |
| X | WO 2008/036906 A1 (SOLAE LLC [US]; ALTEMUELLER ANDREAS G [US]) 27 March 2008 (2008-03-27) <br> * paragraphs [0005] - [0008], [0014], [0015], [0020] - [0023] * <br> * table A * <br> * paragraphs [0024], [0044] - [0050] * | 1-4,7, 13,14 | |
| X | US 2008/248167 A1 (MCMINDES MATTHEW K [US] ET AL) 9 October 2008 (2008-10-09) <br> * figure 1 * <br> * paragraphs [0014], [0017] - [0026], [0033] * <br> * table A * <br> * paragraphs [0034] - [0036], [0044], [0052] - [0059], [0074], [0079], [0083] * | 1-4,7-9, 13,14 | TECHNICAL FIELDS SEARCHED (IPC) <br><br> A23L <br> A23J |
| X | US 2008/254199 A1 (ORCUTT MAC W [US] ET AL) 16 October 2008 (2008-10-16) <br> * figure 1 * <br> * paragraphs [0024], [0026] - [0040] * <br> * table A * <br> * paragraphs [0054], [0064], [0088], [0089] * <br> * claims 1,2,8,11,14,17 * | 1-4,7-9, 13,14 | |

The present search report has been drawn up for all claims

| Place of search | Date of completion of the search | Examiner |
|---|---|---|
| The Hague | 11 October 2017 | Piret-Viprey, E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 16 6060

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2017

| Patent document cited in search report | Publication date | Patent family member(s) | Publication date |
|---|---|---|---|
| WO 2016035058 A2 | 10-03-2016 | AU 2015310482 A1 | 23-03-2017 |
| | | AU 2015310483 A1 | 23-03-2017 |
| | | CA 2959962 A1 | 10-03-2016 |
| | | CA 2959964 A1 | 10-03-2016 |
| | | CN 107072245 A | 18-08-2017 |
| | | CN 107072246 A | 18-08-2017 |
| | | DE 112015004039 T5 | 03-08-2017 |
| | | DE 112015004063 T5 | 27-07-2017 |
| | | EP 3188606 A2 | 12-07-2017 |
| | | EP 3188607 A2 | 12-07-2017 |
| | | FR 3025402 A1 | 11-03-2016 |
| | | FR 3025403 A1 | 11-03-2016 |
| | | FR 3031434 A1 | 15-07-2016 |
| | | FR 3031435 A1 | 15-07-2016 |
| | | FR 3032087 A1 | 05-08-2016 |
| | | FR 3032088 A1 | 05-08-2016 |
| | | FR 3032089 A1 | 05-08-2016 |
| | | GB 2545373 A | 14-06-2017 |
| | | GB 2545374 A | 14-06-2017 |
| | | JP 2017526374 A | 14-09-2017 |
| | | US 2017258109 A1 | 14-09-2017 |
| | | US 2017258123 A1 | 14-09-2017 |
| | | WO 2016035058 A2 | 10-03-2016 |
| | | WO 2016035059 A2 | 10-03-2016 |
| WO 2008036906 A1 | 27-03-2008 | BR PI0715288 A2 | 11-06-2013 |
| | | CN 101686709 A | 31-03-2010 |
| | | EP 2063719 A1 | 03-06-2009 |
| | | US 2008075808 A1 | 27-03-2008 |
| | | WO 2008036906 A1 | 27-03-2008 |
| US 2008248167 A1 | 09-10-2008 | BR PI0809068 A2 | 02-09-2014 |
| | | CN 101754695 A | 23-06-2010 |
| | | EP 2150132 A1 | 10-02-2010 |
| | | KR 20100028532 A | 12-03-2010 |
| | | RU 2009140762 A | 10-05-2011 |
| | | US 2008248167 A1 | 09-10-2008 |
| | | WO 2008124370 A1 | 16-10-2008 |
| US 2008254199 A1 | 16-10-2008 | AT 544888 T | 15-02-2012 |
| | | BR PI0809069 A2 | 02-09-2014 |
| | | CN 101680123 A | 24-03-2010 |
| | | EP 2137343 A1 | 30-12-2009 |
| | | ES 2381902 T3 | 01-06-2012 |
| | | JP 2010523125 A | 15-07-2010 |
| | | JP 2015002751 A | 08-01-2015 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 17 16 6060

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2017

| Patent document cited in search report | Publication date | Patent family member(s) | | Publication date |
|---|---|---|---|---|
| | | RU | 2009140776 A | 10-05-2011 |
| | | US | 2008254199 A1 | 16-10-2008 |
| | | WO | 2008124620 A1 | 16-10-2008 |

For more details about this annex : see Official Journal of the European Patent Office, No. 12/82

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15190251 A
- EP 2016074556 W